# EUROPEAN PATENT SPECIFICATION

(11) **EP 2 982 575 B1**
(45) Date of publication and mention of the grant of the patent: **13.12.2017**
(21) Application number: 15179334.6
(22) Date of filing: 31.07.2015
(51) Int. Cl.: B62D 25/10

(54) **VEHICLE HOOD STRUCTURE**
MOTORHAUBE FÜR EIN FAHRZEUG
STRUCTURE DE CAPOT DE VÉHICULE

(30) Priority: 04.08.2014 JP 2014158593
(43) Date of publication of application: 10.02.2016
(73) Proprietor: Toyota Jidosha Kabushiki Kaisha, Toyota-shi, Aichi-ken 471-8571 (JP)
(72) Inventor: NAKAYAMA, Shuichiro, TOYOTA-SHI, AICHI-KEN, 471-8571 (JP); YILDIRIM CALISCAN, Ozge, B-1930 Zaventem (BE)
(74) Representative: Intès, Didier Gérard André

(56) References cited:
- EP-A1- 2 067 690
- EP-A1- 2 711 271
- DE-A1-102007 007 940
- JP-A- 2013 230 776

## Description

### BACKGROUND OF THE INVENTION

### 1. Field of the Invention

The invention relates to a vehicle hood structure.

### 2. Description of Related Art

Japanese Patent Application Publication No. 2013-230776 (JP 2013-230776 A), for example, describes a vehicle hood structure comprising: a hood inner reinforcement in which a vehicle body front side end portion of the hood inner reinforcement is attached to a hood inner panel included in a hood of a vehicle; and a hood lock reinforcement provided on a vehicle body lower side of the hood inner reinforcement, the hood lock reinforcement having a seating portion to which is attached an engaging portion that locks the hood, in a closed state, to a vehicle body of the vehicle.

However, if the rigidity (strength) of the hood lock reinforcement is low, the hood may vibrate due to an airflow that forms a vortex when a vehicle is traveling at a high speed. In this way, there is still room for improvement in a structure that suppresses vibration of the hood when the vehicle is traveling at a high speed.

### SUMMARY OF THE INVENTION

Therefore, the invention aims to provide a vehicle hood structure capable of suppressing vibration of a hood when a vehicle is traveling at a high speed.

Thus, one aspect of the invention relates to a vehicle hood structure that includes a hood inner reinforcement in which a vehicle body front side end portion of the hood inner reinforcement and a vehicle body rear side end portion of the hood inner reinforcement are attached to a hood inner panel included in a hood of a vehicle; a hood lock reinforcement provided on a vehicle body lower side of the hood inner reinforcement, the hood lock reinforcement having a seating portion to which is attached an engaging portion that locks the hood, in a closed state, to a vehicle body of the vehicle; a bent portion formed in a vehicle width direction near the seating portion of the hood lock reinforcement, the bent portion protruding toward the vehicle body lower side; and a plurality of first protruding portions formed in a line in the vehicle width direction on the bent portion, the first protruding portions protruding toward a vehicle body upper side.

According to this aspect of the invention, the bent portion that protrudes toward the vehicle body lower side is formed in the vehicle width direction near the seating portion to which is attached the engaging portion that locks the hood, in a closed state, to a vehicle body of the vehicle, on the front lock reinforcement, and a plurality of the first protruding portions that protrude toward the vehicle body upper side are formed in a line in the vehicle width direction on this bent portion. Therefore, the rigidity and strength of the hood lock reinforcement are improved, so vibration of the hood when the vehicle is traveling at a high speed is suppressed.

Also, the first protruding portions may at least be formed on a vehicle width direction center portion of the hood lock reinforcement.

The first protruding portions are least formed on a vehicle width direction center portion of the hood lock reinforcement. Therefore, the rigidity and strength of the hood lock reinforcement are able to be more effectively improved compared to a structure in which the first protruding portions are not formed on at least the vehicle width direction center portion of the hood lock reinforcement.

Also, in the vehicle hood structure described above, a plurality of openings may be formed in a line in the vehicle width direction in the hood lock reinforcement, and the first protruding portions may be formed corresponding to these openings.

Also, in the vehicle hood structure described above, a boundary portion between a front inclined portion and a rear inclined portion, of the bent portion, may extend in the vehicle width direction.

The first protruding portions are formed corresponding to the plurality of openings formed in a line in the vehicle width direction in the hood lock reinforcement. Therefore, the rigidity and strength of a portion on the hood lock reinforcement where the rigidity and strength are reduced due to the openings are able to be efficiently improved.

Also, in the vehicle hood structure described above, a plurality of openings may be formed in a line in the vehicle width direction in the hood lock reinforcement; a cross portion may be provided between the plurality of openings; each of the first protruding portions may be formed in a rectangular shape in which a length direction of the rectangular shape is consistent with a vehicle body front-rear direction, and protrude toward the vehicle body upper side; and the first protruding portions may be formed in a position on a vehicle body front side of the cross portion and on a vehicle body rear side of the seating portion, and positions on a vehicle body front side of the openings on a vehicle width direction outside, the positions on the vehicle body front side including front side edge portions of the openings on the vehicle width direction outside.

Also, in the vehicle hood structure described above, a plurality of flange portions that are attached to the hood inner panel may be provided protruding, in a line in the vehicle width direction, on at least a vehicle body rear side end portion of the hood inner reinforcement, and second protruding portions that extend in a vehicle body front-rear direction may be formed on the flange portions.

A plurality of flange portions that are attached to the hood inner panel are provided protruding, in a line in the vehicle width direction, on at least a vehicle body rear side end portion of the hood inner reinforcement, and second protruding portions that extend in a vehicle body front-rear direction may be formed on these flange portions. Therefore, the rigidity and strength of the hood inner reinforcement are improved, so the rigidity and strength of the hood lock reinforcement provided on the vehicle body lower side of this hood inner reinforcement are further improved.

Also, in the vehicle hood structure described above, the second protruding portions may be formed in shapes protruding toward the vehicle body upper side.

The second protruding portions are formed in shapes protruding toward the vehicle body upper side. Therefore, the rigidity and strength of the hood inner reinforcement are able to be efficiently improved, and thus the rigidity and strength of the hood lock reinforcement provided on the vehicle body lower side of this hood inner reinforcement are able to be efficiently improved, compared to a structure in which the second protruding portions are not formed in shapes protruding toward the vehicle body upper side.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective view of a vehicle hood structure according to one example embodiment of the invention;
FIG. 2 is a sectional view of the vehicle hood structure according to the example embodiment;
FIG. 3 is a perspective view of a hood lock reinforcement included in the vehicle hood structure according to the example embodiment;
FIG. 4 is a perspective view of a hood lock reinforcement included in the vehicle hood structure according to the example embodiment; and
FIG. 5 is a graph showing a vibration amplitude of a hood at a high vehicle speed, with the vehicle hood structure according to the example embodiment, together with a comparative example.

### DETAILED DESCRIPTION OF EMBODIMENTS

Hereinafter, example embodiments of the invention will be described in detail with reference to the accompanying drawings. To simplify the description, in the drawings, the arrow UP indicates a vehicle body upward direction, the arrow FR indicates a vehicle body forward direction, and the arrow OUT indicates a vehicle width direction outside. Also, in the description below, when directions of up and down, front and rear, and left and right are mentioned without further specification, they are understood to indicate the directions of up and down in the vehicle body up and down direction, front and rear in the vehicle body front-rear direction, and left and right in the vehicle left-right direction (vehicle width direction), respectively.

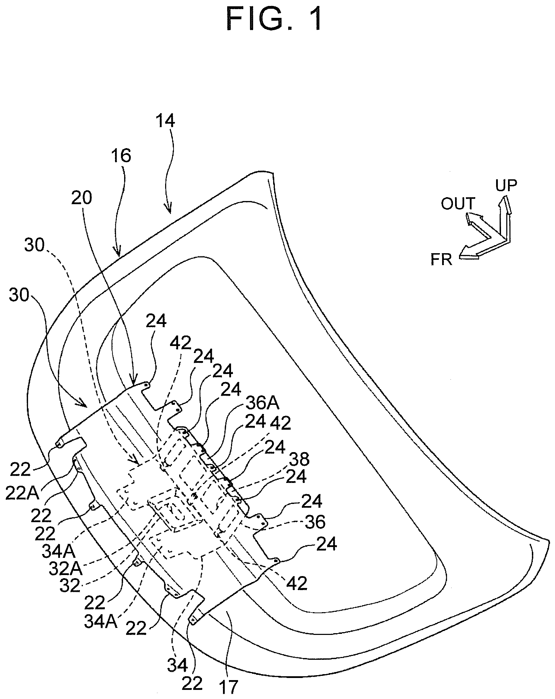

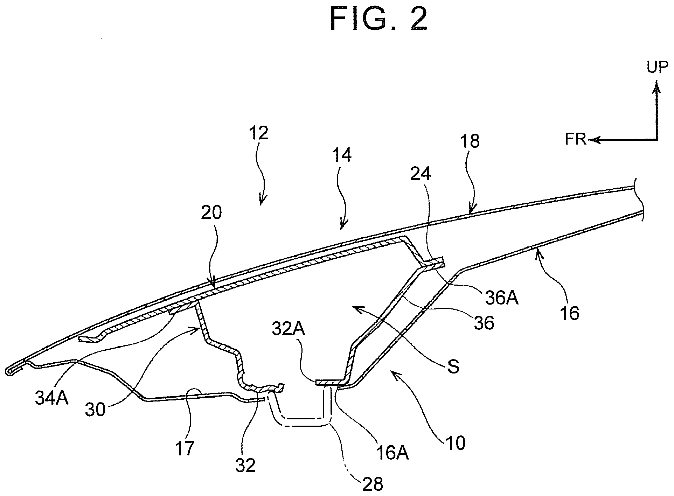

As shown in FIGS. 1 and 2, a hood 14 that covers an engine compartment, now shown, of a vehicle 12 (i.e., a vehicle body thereof) from the vehicle body upper side, includes a hood inner panel 16 and a hood outer panel 18. The hood outer panel 18 is formed in a curved shape that protrudes toward the vehicle body upper side, in a front view, and forms a portion of a design surface of the vehicle 12.

The hood inner panel 16 that is included in a vehicle hood structure 10 according to this example embodiment is arranged farther to the vehicle body lower side than the hood outer panel 18, and a rear end portion of the hood inner panel 16 is joined by joining means, not shown, to a rear end portion of the hood outer panel 18. Also, a front end portion of the hood inner panel 16 is joined to a front end portion of the hood outer panel 18 by hemming the front end portion of the hood outer panel 18 (see FIG. 2).

Also, a recessed portion 17 that is recessed toward the vehicle body lower side is formed in the vehicle width direction on a front portion of the hood inner panel 16, and a space S is formed between this recessed portion 17 and the front portion of the hood outer panel 18 (see FIG. 2). Also, a generally flat sheet-shaped hood inner reinforcement 20, of which the vehicle width direction is the length direction, is arranged covering the vehicle body upper side of the recessed portion 17, on a vehicle width direction center portion side at the front portion of the hood inner panel 16.

More specifically, a plurality of flange portions 22 are integrally provided protruding at intervals in a line in the vehicle width direction on a front end portion of the hood inner reinforcement 20, as shown in FIG. 1. These flange portions 22 are joined and fixed, by welding or mastic material, to the front end portion of the hood inner panel 16. Therefore, a junction point 22A is formed at each of these flange portions 22. Also, these flange portions 22 are provided protruding so as to be bilaterally symmetrical, for example.

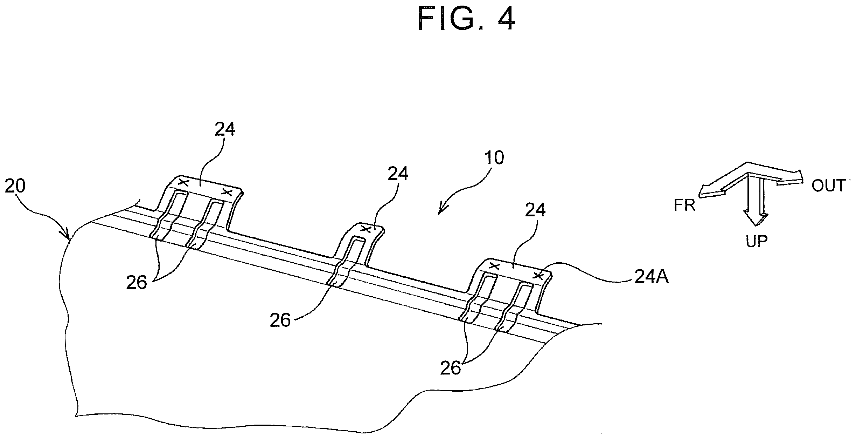

Similarly, a plurality of flange portions 24 are integrally provided protruding at intervals in a line in the vehicle width direction on a rear end portion of the hood inner reinforcement 20. These flange portions 24 are joined and fixed, by welding or mastic material, to a substantially center portion of the hood inner panel 16 in the vehicle body front-rear direction. Therefore, a junction point 24A is formed at each of these flange portions 24 (see FIG. 4). Also, these flange portions 24 are provided protruding so as to be bilaterally symmetrical, for example.

Also, as shown in FIG. 2, the hood inner reinforcement 20 is arranged near a lower surface of the hood outer panel 18. Consequently, the space S is formed between the hood inner reinforcement 20 (i.e., the hood outer panel 18) and the hood inner panel 16, and the hood inner panel 16 is reinforced by the hood inner reinforcement 20.

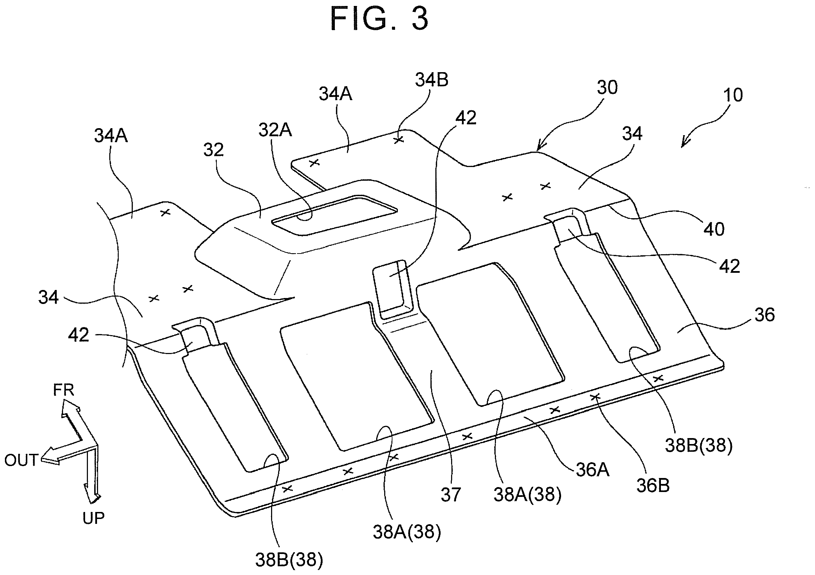

Also, a hood lock reinforcement 30 is arranged in the space S (in the recessed portion 17) between the hood inner reinforcement 20 and the hood inner panel 16. As shown in FIGS. 2 and 3, the hood lock reinforcement 30 has a rectangular flat plate-shaped seating portion 32 that is arranged along the upper surface of the hood inner panel 16 in the recessed portion 17 but does not contact that upper surface, a rectangular flat plate-shaped front inclined portion 34 that is integrally provided on both sides of the seating portion 32 in the vehicle width direction and extends toward the vehicle body front upper side, and a rectangular flat plate-shaped rear inclined portion 36 that is integrally provided on a rear end portion of the seating portion 32 and the front inclined portions 34 and extends toward the vehicle body rear upper side.

That is, the hood lock reinforcement 30 is formed by the seating portion 32, the front inclined portions 34, and the rear inclined portion 36 and the hood lock reinforcement 30 is formed in a general V-shape that opens and extends in the vehicle body front-rear direction in a sectional view viewed from the vehicle width direction. As shown in FIGS. 1 and 2, left and right flange portions 34A integrally formed on front end portions of the front inclined portions 34 are joined and fixed, by welding or mastic material, to the front portion side of the hood inner reinforcement 20. Therefore, a plurality of junction points 34B (see FIG. 3) are formed on each flange portion 34A.

Also, a flange portion 36A integrally formed on the rear end portion of the rear inclined portion 36 is joined and fixed, by welding or mastic material, to the plurality of flange portions 24 on the vehicle width direction inside of the hood inner reinforcement 20. Therefore, a plurality of junction points 36B (see FIG. 3) are formed on the flange portion 36A.

Also, the plurality of flange portions 24 on the vehicle width direction inside of the hood inner reinforcement 20 are joined and fixed, together with the flange portion 36A of the rear inclined portion 36, to the hood inner panel 16. As a result, the hood lock reinforcement 30 is provided on the vehicle body lower side of the hood inner reinforcement 20.

A structure is also possible in which the plurality of flange portions 24 on the vehicle width direction inside that the flange portion 36A of the rear inclined portion 36 is joined and fixed to are not joined and fixed to the hood inner panel 16 (see FIG. 2), and only the plurality of flange portions 24 on the vehicle width direction outside are joined and fixed to the hood inner panel 16.

Also, a plurality of (e.g., four) openings 38 are formed bilaterally symmetrical and at intervals in a line in the vehicle width direction in the rear inclined portion 36, as shown in FIG. 3. Each of these openings 38 is formed in a rectangular shape in which the length direction of the rectangular shape is consistent with the vehicle body front-rear direction. A width (i.e., a length in the vehicle width direction) of openings 38B on the vehicle width direction outside is smaller than the width (i.e., a length in the vehicle width direction) of the width of openings 38A on the vehicle width direction inside.

The hood lock reinforcement 30 is able to be made lighter by the formation of these kinds of openings 38A and 38B. A portion between the openings 38A on the vehicle width direction inside is a center portion of the rear inclined portion 36 in the vehicle width direction, and is a cross portion 37 that extends in the vehicle body front-rear direction.

Also, a portion that protrudes toward the vehicle body lower side, i.e., a boundary portion between the front inclined portions 34 and the rear inclined portion 36, near the seating portion 32 of the hood lock reinforcement 30, is a bent portion 40 that extends in the vehicle width direction. A plurality of (at least three) first protruding portions 42 (recessed portions when viewed from the vehicle body lower side in FIG. 3) are integrally formed at intervals in a line in the vehicle width direction on this bent portion 40.

The first protruding portions 42 are formed in rectangular shapes in which the length direction of the rectangular shape is consistent with the vehicle body front-rear direction, and so as to protrude toward the vehicle body upper side. These first protruding portions 42 are formed in at least a position on the vehicle body front side of the cross portion 37 and on the vehicle body rear side of the seating portion 32 (i.e., between the cross portion 37 and the seating portion 32), and positions on the vehicle body front side of the openings 38B on the vehicle width direction outside, the positions on the vehicle body front side including front side edge portions of the openings 38B on the vehicle width direction outside (i.e., straddling both the rear inclined portion 36 and the front inclined portions 34).

The widths (i.e., the lengths in the vehicle width direction) of the first protruding portions 42 are all the same, and are smaller than the widths (i.e., the lengths in the width direction) of the openings 38B and the width (i.e., the length in the width direction) of the cross portion 37. Having such rectangular-shaped first protruding portions 42 formed separately from each other in these positions on the bent portion 40 improves the rigidity and strength of the bent portion 40, thereby improving the rigidity and strength of the hood lock reinforcement 30.

Also, a hood striker 28 that serves as an engaging portion for locking the hood 14 in a closed state to the vehicle body is attached to the seating portion 32 of the hood lock reinforcement 30, as shown in FIG. 2. This hood striker 28 is formed in a general U-shape that has corners, when viewed from the vehicle width direction, and is attached so as to protrude from the seating portion 32 toward the vehicle body lower side, and is supported by this seating portion 32.

Also, the hood striker 28 protrudes toward the vehicle body lower side from an opening 16A formed in the recessed portion 17 of the hood inner panel 16, and is retained by a hood lock, not shown, provided on the vehicle body side. As a result, the hood 14 is locked in a closed state to the vehicle body.

As shown in FIGS. 1 to 3, the length direction of a long hole 32A is consistent with the vehicle width direction and the long hole 32A is formed in the seating portion 32, and the hood striker 28 is attached to the seating portion 32 so as to face this long hole 32A. Therefore, the hood lock on the vehicle body side that retains the hood striker 28 will not interfere with the seating portion 32.

Also, as shown in FIG. 4, second protruding portions 26 that protrude toward the vehicle body upper side are formed on the flange portions 24 that are provided protruding on the rear end portion of the hood inner reinforcement 20. The second protruding portions 26 are each formed in a rectangular shape in which a length direction of the rectangular shape is consistent with the vehicle body front-rear direction, and are formed on at least a plurality of the flange portions 24 that are joined and fixed to the hood inner panel 16.

That is, the second protruding portions 26 in this example embodiment are also formed on the flange portions 24 on the vehicle width direction inside that are joined and fixed, together with the flange portion 36A of the rear inclined portion 36, to the hood inner panel 16. As a result, the rigidity and strength of the hood lock reinforcement 30 that is provided on the vehicle body lower side of the hood inner reinforcement 20 are able to be further improved.

Next, the operation of the vehicle hood structure 10 having a structure such as that described above will be described.

When the vehicle 12 is traveling at a high speed, the hood 14 may vibrate due to a vortex airflow (aerodynamic force) generated from the vehicle body front side of the vehicle 12. However, with the vehicle hood structure 10 according to this example embodiment, this vibration of the hood 14 is able to be suppressed, as described below.

The hood 14 is locked in a closed state by the hood striker 28 being retained by the hood lock on the vehicle body side. Therefore, vibration of the hood 14 is able to be suppressed if the rigidity and strength of the hood lock reinforcement 30 that supports the hood striker 28 are able to be improved.

The hood lock reinforcement 30 in this example embodiment is formed in a general V-shape that opens and extends in the vehicle body front-rear direction in a sectional view viewed from the vehicle width direction. Therefore, a load of a bending moment that acts on the hood lock reinforcement 30 is highest at the bent portion 40. Here, the plurality of first protruding portions 42 are formed at intervals in a line in the vehicle width direction, on this bent portion 40.

More specifically, the length direction of the rectangular first protruding portions 42 is consistent with the vehicle body front-rear direction, and the rectangular first protruding portions 42 protrude toward the vehicle body upper side, the rectangular first protruding portions 42 are formed separately from each other in a position on the vehicle body front side of the cross portion 37 and on the vehicle body rear side of the seating portion 32 (i.e., between the cross portion 37 and the seating portion 32), and in positions on the vehicle body front side of the openings 38B on the vehicle width direction outside, the positions including the front side edge portions of the openings 38B on the vehicle width direction outside.

Therefore, the rigidity and strength of the bent portion 40, including portions where the rigidity and strength are reduced due to the openings 38 being formed, are able to be efficiently and effectively improved. That is, the rigidity and strength of the hood lock reinforcement 30 are able to be efficiently and effectively increased.

Thus, even if a vortex airflow (aerodynamic force) is generated from the vehicle body front side when the vehicle 12 is traveling at a high speed, vibration generated in the hood 14 is able to be effectively absorbed by the hood lock reinforcement 30, so this vibration is able to be efficiently and effectively suppressed.

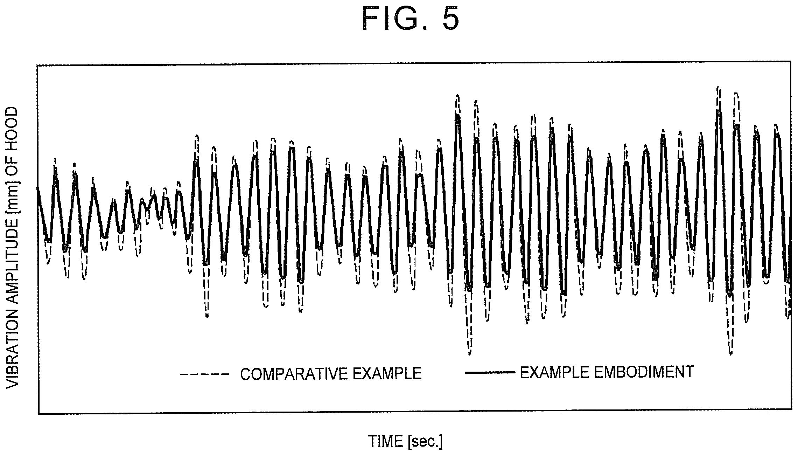

FIG. 5 is a view of a graph showing the amplitude of vibration generated in the hood when the vehicle 12 is traveling at a high speed. The dotted line indicates the vibration amplitude of a hood according to a comparative example, not shown, that includes a hood lock reinforcement, also not shown, in which the first protruding portions 42 are not formed on the bent portion 40, and the solid line indicates the vibration amplitude of the hood 14 according to this example embodiment that includes the hood lock reinforcement 30 in which a plurality of the first protruding portions 42 are formed on the bent portion 40.

As shown in FIG. 5, the vibration amplitude of the hood 14 according to this example embodiment is approximately 20% lower at the peak value than the vibration amplitude of the hood according to the related art. In this way, forming a plurality of the rectangular first protruding portions 42 that protrude toward the vehicle body upper side at intervals in a line in the vehicle width direction (i.e., formed separately from each other in the positions described above) is effective for damping vibration generated in the hood 14.

When the second protruding portions 26 that protrude toward the vehicle body upper side are formed on the flange portions 24 of the hood inner reinforcement 20, as shown in FIG. 4, the rigidity and strength of this hood inner reinforcement 20 are able to be improved. Therefore, the rigidity and strength of the hood lock reinforcement 30 that is provided on the vehicle body lower side of this hood inner reinforcement 20 are able to be further improved.

That is, even if a vortex airflow (aerodynamic force) is generated from the vehicle body front side when the vehicle 12 is traveling at a high speed, vibration generated in the hood 14 is able to be even more efficiently absorbed by the hood lock reinforcement 30, so this vibration is able to be even more efficiently and effectively suppressed. The second protruding portions 26 formed on the flange portions 24 of the hood inner reinforcement 20 may also be formed in shapes that protrude toward the vehicle body lower side.

Heretofore, the vehicle hood structure 10 according to this example embodiment has been described with reference to the drawings, but the vehicle hood structure 10 according to this example embodiment is not limited to the drawings. That is, suitable design changes are also possible within the scope of the invention. For example, the first protruding portions 42 formed on the bent portion 40 are not limited to the positions shown in the drawings, and the shapes of these first protruding portions 42 are not limited to the rectangular shapes shown in the drawings.

Also, the first protruding portions 42 formed on the bent portion 40 are not limited to the three shown in the drawings. That is, two additional first protruding portions 42 may also be formed, for a total of five, in positions on the vehicle body front side, including the front side edge portions, of the openings 38A on the vehicle width direction inside, for example. Also, the second protruding portions 26 may also be formed on the flange portions 22 of the hood inner reinforcement 20.

Furthermore, a structure in which the second protruding portions 26 are not formed on the flange portions 22 and 24 of the hood inner reinforcement 20 is also possible. Also, the flange portions 22 and 24 of the hood inner reinforcement 20 and the flange portions 34A and 36A of the hood lock reinforcement 30 may be fastened and fixed by nuts and bolts or rivets or the like to the hood inner panel 16 and the hood inner reinforcement 20, respectively.

## Claims

1. A vehicle hood structure **characterized by** comprising:
a hood inner reinforcement (20) in which a vehicle body front side end portion of the hood inner reinforcement (20) and a vehicle body rear side end portion of the hood inner reinforcement (20) are attached to a hood inner panel included in a hood of a vehicle;
a hood lock reinforcement (30) provided on a vehicle body lower side of the hood inner reinforcement (20), the hood lock reinforcement (30) having a seating portion (32) to which is attached an engaging portion (28) that locks the hood, in a closed state, to a vehicle body of the vehicle;
a bent portion (40) formed in a vehicle width direction near the seating portion (32) of the hood lock reinforcement (30), the bent portion (40) protruding toward the vehicle body lower side; and
a plurality of first protruding portions (42) formed in a line in the vehicle width direction on the bent portion (40), the first protruding portions (42) protruding toward a vehicle body upper side.

2. The vehicle hood structure according to claim 1, wherein
the first protruding portions (42) are at least formed on a vehicle width direction center portion of the hood lock reinforcement (30).

3. The vehicle hood structure according to claim 1 or 2, wherein
a boundary portion between a front inclined portion (34) and a rear inclined portion (36), of the bent portion (40), extends in the vehicle width direction.

4. The vehicle hood structure according to any one of claims 1 to 3, wherein
a plurality of openings (38) are formed in a line in the vehicle width direction in the hood lock reinforcement (30); and
the first protruding portions (42) are formed corresponding to the openings (38).

5. The vehicle hood structure according to any one of claims 1 to 4, wherein
a plurality of openings (38) are formed in a line in the vehicle width direction in the hood lock reinforcement (30);
a cross portion (37) is provided between the plurality of openings (38);
each of the first protruding portions (42) is formed in a rectangular shape in which a length direction of the rectangular shape is consistent with a vehicle body front-rear direction, and protrudes toward the vehicle body upper side; and
the first protruding portions (42) are formed in a position on a vehicle body front side of the cross portion (37) and on a vehicle body rear side of the seating portion (32), and positions on a vehicle body front side of the openings (38) on a vehicle width direction outside, the positions on the vehicle body front side including front side edge portions of the openings (38) on the vehicle width direction outside.

6. The vehicle hood structure according to any one of claims 1 to 5, wherein
a plurality of flange portions (24) that are attached to the hood inner panel are provided protruding, in a line in the vehicle width direction, on at least a vehicle body rear side end portion of the hood inner reinforcement (20); and
second protruding portions (26) that extend in a vehicle body front-rear direction are formed on the flange portions (24).

7. The vehicle hood structure according to claim 6, wherein
the second protruding portions (26) are formed in shapes protruding toward the vehicle body upper side.

## Patentansprüche

1. Motorhaubenstruktur für ein Fahrzeug, **dadurch gekennzeichnet, dass** sie umfasst:
eine innere Motorhaubenverstärkung (20), wobei ein Fahrzeugkarosserie-Vorderseitenendabschnitt der inneren Motorhaubenverstärkung (20) und ein Fahrzeugkarosserie-Rückseitenendabschnitt der inneren Motorhaubenverstärkung (20) an einem inneren Motorhaubenpaneel angebracht sind, das in einer Motorhaube eines Fahrzeugs enthalten ist,
eine Motorhaubenverriegelungsverstärkung (30), die auf einer Fahrzeugkarosserie-Unterseite der inneren Motorhaubenverstärkung (20) angeordnet ist, wobei die Motorhaubenverriegelungsverstärkung (30) einen Sitzabschnitt (32) aufweist, an dem ein Eingriffnahmeabschnitt (28) angebracht ist, der die Motorhaube, in einem geschlossen Zustand, an einer Fahrzeugkarosserie des Fahrzeugs verriegelt,
einen gebogenen Abschnitt (40), der in einer Fahrzeugbreitenrichtung nahe dem Sitzabschnitt (32) der Motorhaubenverriegelungsverstärkung (30) ausgebildet ist, wobei der gebogene Abschnitt (40) in Richtung der Fahrzeugkarosserie-Unterseite vorsteht, und
mehrere erste vorstehende Abschnitte (42), die in einer Linie in der Fahrzeugbreitenrichtung auf dem gebogenen Abschnitt (40) ausgebildet sind, wobei die ersten vorstehenden Abschnitte (42) in Richtung einer Fahrzeugkarosserie-Oberseite vorstehen.

2. Motorhaubenstruktur für ein Fahrzeug nach Anspruch 1, wobei
die ersten vorstehenden Abschnitte (42) mindestens in einem Fahrzeugbreitenrichtungs-Mittelabschnitt der Motorhaubenverriegelungsverstärkung (30) ausgebildet sind.

3. Motorhaubenstruktur für ein Fahrzeug nach Anspruch 1 oder 2, wobei
sich ein Grenzabschnitt zwischen einem vorderen geneigten Abschnitt (34) und einem hinteren geneigten Abschnitt (36) des gebogenen Abschnitts (40) in der Fahrzeugbreitenrichtung erstreckt.

4. Motorhaubenstruktur für ein Fahrzeug nach einem der Ansprüche 1 bis 3, wobei
mehrere Öffnungen (38) in einer Linie in der Fahrzeugbreitenrichtung in der Motorhaubenverriegelungsverstärkung (30) ausgebildet sind und
die ersten vorstehenden Abschnitte (42) entsprechend den Öffnungen (38) ausgebildet sind.

5. Motorhaubenstruktur für ein Fahrzeug nach einem der Ansprüche 1 bis 4, wobei
mehrere Öffnungen (38) in einer Linie in der Fahrzeugbreitenrichtung in der Motorhaubenverriegelungsverstärkung (30) ausgebildet sind,
ein Querabschnitt (37) zwischen den mehreren Öffnungen (38) angeordnet ist,
jeder der ersten vorstehenden Abschnitte (42) in einer rechteckigen Form ausgebildet ist, wobei eine Längsrichtung der rechteckigen Form mit einer Fahrzeugkarosserie-Längsrichtung übereinstimmt, und in Richtung der Fahrzeugkarosserie-Oberseite vorsteht, und
die ersten vorstehenden Abschnitte (42) in einer Position auf einer Fahrzeugkarosserie-Vorderseite des Querabschnitts (37) und auf einer Fahrzeugkarosserie-Rückseite des Sitzabschnitts (32) und Positionen auf einer Fahrzeugkarosserie-Vorderseite der Öffnungen (38) auf einer Außenseite in Fahrzeugbreitenrichtung ausgebildet sind, wobei die Positionen auf der Fahrzeugkarosserie-Vorderseite vorderseitige Randabschnitte der Öffnungen (38) auf der Außenseite in Fahrzeugbreitenrichtung enthalten.

6. Motorhaubenstruktur für ein Fahrzeug nach einem der Ansprüche 1 bis 5, wobei
mehrere Flanschabschnitte (24), die an dem inneren Motorhaubenpaneel angebracht sind, vorstehend, in einer Linie in der Fahrzeugbreitenrichtung, an mindestens einem Fahrzeugkarosserie-Rückseitenendabschnitt der inneren Motorhaubenverstärkung (20) angeordnet sind, und
zweite vorstehende Abschnitte (26), die sich in einer Fahrzeugkarosserie-Längsrichtung erstrecken, an den Flanschabschnitten (24) ausgebildet sind.

7. Motorhaubenstruktur für ein Fahrzeug nach Anspruch 6, wobei
die zweiten vorstehenden Abschnitte (26) in Formen ausgebildet sind, die in Richtung der Fahrzeugkarosserie-Oberseite vorstehen.

## Revendications

1. Structure de capot de véhicule **caractérisée en ce qu'**elle comprend :
un renforcement interne de capot (20) dans lequel une partie d'extrémité latérale avant de carrosserie de véhicule du renforcement interne de capot (20) et une partie d'extrémité latérale arrière de carrosserie de véhicule du renforcement interne de capot (20) sont fixées à un panneau interne de capot inclus dans un capot d'un véhicule ;
un renforcement de verrou de capot (30) prévu sur le côté inférieur de carrosserie de véhicule du renforcement interne de capot (20), le renforcement de verrou de capot (30) ayant une partie de siège (32) à laquelle est fixée une partie de mise en prise (28) qui verrouille le capot, dans un état fermé, à une carrosserie de véhicule du véhicule ;
une partie pliée (40) formée dans le sens de la largeur du véhicule à proximité de la partie de siège (32) du renforcement de verrou de capot (30), la partie pliée (40) faisant saillie vers le côté inférieur de carrosserie de véhicule ; et
une pluralité de premières parties en saillie (42) formées dans une ligne dans le sens de la largeur du véhicule sur la partie pliée (40), les premières parties en saillie (42) faisant saillie vers un côté supérieur de carrosserie de véhicule.

2. Structure de capot de véhicule selon la revendication 1, dans laquelle :
les premières parties en saillie (42) sont au moins formées sur une partie centrale dans le sens de la largeur du véhicule du renforcement de verrou de capot (30).

3. Structure de capot de véhicule selon la revendication 1 ou 2, dans laquelle :
une partie de limite entre une partie inclinée avant (34) et une partie inclinée arrière (36), de la partie pliée (40), s'étend dans le sens de la largeur du véhicule.

4. Structure de capot de véhicule selon l'une quelconque des revendications 1 à 3, dans laquelle :
une pluralité d'ouvertures (38) sont formées dans une ligne dans le sens de la largeur du véhicule dans le renforcement de verrou de capot (30) ; et
les premières parties en saillie (42) sont formées en correspondance des ouvertures (38).

5. Structure de capot de véhicule selon l'une quelconque des revendications 1 à 4, dans laquelle :
une pluralité d'ouvertures (38) sont formées sur une ligne dans le sens de la largeur du véhicule dans le renforcement de verrou de capot (30) ;
une partie transversale (37) est prévue entre la pluralité d'ouvertures (38) ;
chacune des premières parties en saillie (42) est formée selon une forme rectangulaire dans laquelle le sens de la longueur de la forme rectangulaire est compatible avec le sens avant - arrière de carrosserie de véhicule, et fait saillie vers le côté supérieur de carrosserie de véhicule ; et
les premières parties en saillie (42) sont formées dans une position sur un côté avant de carrosserie de véhicule de la partie transversale (37) et sur un côté arrière de carrosserie de véhicule de la partie de siège (32), et les positions sur un côté avant de carrosserie de véhicule des ouvertures (38) à l'extérieur du sens de la largeur du véhicule, les positions sur le côté avant de carrosserie de véhicule comprenant des parties de bord du côté avant des ouvertures (38) à l'extérieur du sens de la largeur du véhicule.

6. Structure de capot de véhicule selon l'une quelconque des revendications 1 à 5, dans laquelle :
une pluralité de parties de bride (24) qui sont fixées au panneau interne de capot sont prévues en saillie, sur une ligne dans le sens de la largeur du véhicule, sur au moins une partie d'extrémité latérale arrière de carrosserie de véhicule du renforcement interne de capot (20) ; et
des secondes parties en saillie (26) qui s'étendent dans un sens avant - arrière de carrosserie de véhicule sont formées sur les parties de bride (24).

7. Structure de capot de véhicule selon la revendication 6, dans laquelle :
les secondes parties en saillie (26) sont formées selon des formes faisant saillie vers le côté supérieur de carrosserie de véhicule.
